# EUROPEAN PATENT APPLICATION

(11) **EP 2 181 600 A2**
(43) Date of publication of application: **05.05.2010**
(21) Application number: 09011457.0
(22) Date of filing: 08.09.2009
(51) Int. Cl.: A21C 3/02

(54) **Rolling pin for flattening pizza dough**

(30) Priority: 30.10.2008 IT TO20080143
(71) Applicant: CMT Costruzioni Meccaniche e Tecnologia S.p.A., 12016 Peveragno CN (IT)
(72) Inventor: Tomatis, Stefano, 12016 Peveragno (CN) (IT)
(74) Representative: Spandonari, Carlo

(57) **Abstract**

A plurality of cylindrical rollers (10, 12,..., 14, 16) are axially bored and freely journaled side by side on a shaft (18) provided with handles (22, 24) at its opposite ends. The rollers (10, 12,..., 14, 16) have alternately different diameters from any roller to the next.

## Description

This invention is concerned with an improved rolling pin designed for manually flattening dough, particularly for flattening dough lumps in the preparation of pizzas.

The conventional rolling pin, which has been used since time immemorial for flattening or spreading flour dough and the like, comprises a roller or cylinder of massive wood, extending into two axial handles at its opposite ends, so that the user may roll it over the dough by letting the handles turn within the hollows of his hands. For an easier handling, rolling pins are commonly used today wherein the roller is a hollow cylinder journaled on an axial shaft provided with handles. Here, the handles are firmly grasped by the user and moved forward and backward, thereby letting the roller turn with respect to the shaft by reacting against the dough surface.

When the user flattens lumps of pizza dough by means of the above known rolling pin, in order to obtain thin round dough disks, the dough will progressively stretch to an oval, rather than round, shape under the rectilinear rolling action of the roller. However, any attempts to change the rolling direction by forcing or steering the handles are both tiring and ineffective, because they are hindered by the adherence between the roller surface and the dough, and lead to misshaping and even tearing in the dough.

Therefore, in the attempt of overcoming the above drawback, rolling pins have been proposed, e.g., from US-A- 2,451,170, which comprise a series of cylindrical rollers equal in diameter, which are axially bored and freely journaled side by side on a shaft. With a rolling pin of this type, the change of direction will meet with no appreciable resistance, so that the dough can be alternately rolled in directions at right angles to each other and the stretching, ovalizing effect of the rolling action is accordingly minimized.

However, even when a rolling pin as above is used, the resilience of the dough and its surface tension generate a returning force, after the pressing action, which makes the rolling partly fruitless. Accordingly, the rolling action must be repeated several times to obtain a disk as flat as required, with consequent slowing down of the flattening operation.

Accordingly, it is a main object of the present invention to provide a rolling pin, particularly for flattening lumps of pizza dough, which, in use, is capable of reducing the returning force deriving from the resilience of the dough, in such a way as to ease the flattening operation and accelerate it.

It is another object of the invention to provide a rolling pin which, in use, applies a massaging action on the dough, in a way similar to a pizza-chef using his fingers to spread the dough.

The above and other objects and advantages, such as will appear from the following disclosure, are achieved by the invention by a rolling pin having the features recited in claim 1. The dependent claims point out other advantageous, though optional, features of the invention.

A preferred embodiment of the invention is described below, as no-limiting example, with reference to the attached drawings, wherein:
Fig. 1 is a side view, partly in axial cross-section, of a rolling pin according to a preferred embodiment of the invention;
Fig. 2 is an enlarged perspective view of a roller belonging to the rolling pin of Fig. 1;
Fig. 3 is an enlarged view of a detail of Fig. 1, in axial cross-section;
Fig. 4 is a schematic plan view of a rolling pin according to the invention, as it rolls over a disk of dough in a constant direction; and
Fig. 5 is a schematic plan view similar to Fig. 4, as the rolling pin rolling direction over the dough is deviated.

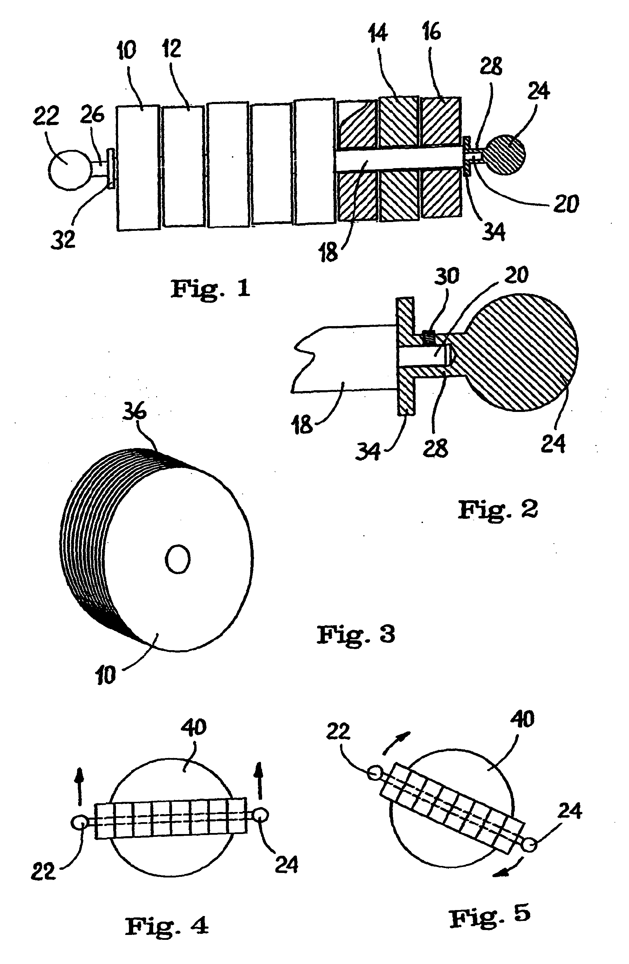

With reference to Figs. 1-3, the rolling pin according to the preferred embodiment of the invention comprises eight cylindrical rollers 10, 12,..., 14, 16, which are axially bored and journaled side by side on a shaft 18. Rollers 10, 12, ..., 14, 16 have alternated diameters which slightly differ from any roller to the next, e.g., of 5 to 6 mm, for the scopes which will be clarified below. The diameters of the rollers in the example illustrated are alternately 130 and 135 mm, while the axial length of all the rollers is 30 mm, although both the length and the diameter may be changed, as well as the number of rollers. However, for best effectiveness and convenience to the user, it is advantageous that the diameter is in the range 80 to 200 mm.

Rollers 10, 12, ..., 14, 16 are preferably made of a synthetic material, such as a non-toxic polymer having self-lubricating properties, either inherent or induced by additives. By way of example, an appropriate material is one of the polyammidic polymers known by the commercial name "Ertalon".

Shaft 18 is a polished, cylindrical steel rod, having at each end a respective reduced-diameter, cylindrical shank 20 (only one shank is visible on Figs. 1 and 3). Each shank 20 carries a respective handle 22, 24, substantially ball-shaped or oval-shaped, each having a respective cylindrical extension 26, 28, which are axially bored to engage a respective shank 20. The handles are locked by alien screws such as 30. Handles 22, 24 are further provided with respective flanges 32, 34 to endose rollers 10,12,..., 14,16 on shaft 18.

The rollers are preferably scored with thin, shallow peripheral grooves 36, preferably with a pitch of 3 to 4 grooves per centimeter of length, for reasons that are clarified below.

The above described rolling pin may be used with rectilinear rolling, as shown in Fig. 4, where the handles are pushed horizontally in the same uniform symbolized by arrows A-A, and in that case it will behave as a rolling pin having a single, elongated roller, when flattening a lump of dough 40. If a user steers the handles as with the handlebar of a bicycle, as shown by arrows B-B in Fig. 5, rollers 10 and 16 will turn in opposite directions, an so will rollers 12 and 14, though over a shorter span, and so on for the inner pairs of rollers. The change of direction will therefore meet with no appreciable resistance.

Due to the alternation of larger and smaller rollers, when the dough is alternately rolled in directions at right angles to each other the resulting dough disk is impressed with relatively deep, substantially square marks, which create a discontinuity in the dough fibres thereby reducing the resilience of the dough and, consequently, the returning force after the pressing action.

The above effect is further enhanced by the scoring on the rollers, which performs a scratching or surface incision on the dough which decreases the surface tension of the latter.

Furthermore, it has been found that the alternernation of diameters has the further effect that the dough, while flattening, is also "massaged" in a way similar to a pizza-chef using his fingers to spread the dough, with advantageous effects in the consistency of the resulting dough disk.

Not only the size, but also the number of rollers can be changed, giving rise to rolling pins having, e.g., six or seven rollers, or even with only four rollers. It is preferable, though not essential, that the number of rollers is even. Although in the preferred embodiment the rollers are all of equal length, it is envisaged that rollers of different length may be used, e.g., having lengths symmetrically increasing from the middle of the shaft toward its ends. The materials may also be changed, and the rollers can be made from other polymers or even from metallic materials such as aluminum or the like, although a synthetic material is preferable to a metal, so that excessive weights are avoided. Scoring the operating surface of the rollers is advantageous but unessential.

The roller-journaling shaft may also be implemented in different forms and materials, particularly with reference to the handles and their fastening at the ends of the shaft, as will be obvious for the person skilled in the art.

## Claims

1. A rolling pin for flattening dough, comprising a plurality of cylindrical rollers (10, 12,..., 14, 16) which are axially bored and freely journaled side by side on a shaft (18) provided with handles (22, 24) at its opposite ends, **characterized in that** said rollers (10, 12,..., 14, 16) have alternately different diameters from any roller to the next.

2. The rolling pin of claim 1, **characterized in that** the difference between the diameters of the rollers is in the range 2 to 6 mm.

3. The rolling pin of claim 1 or 2, **characterized in that** it comprises an even number of said rollers (10, 12,..., 14, 16).

4. The rolling pin of claim 3, **characterized in that** said rollers (10,12,..., 14, 16) are eight in number.

5. The rolling pin of any of claims 1 to 4, **characterized in that** the diameter of each roller is in the range 80 to 200 mm.

6. The rolling pin of any of claims 1 to 5, **characterized in that** the rollers are scored with parallel peripheral grooves (36).

7. The rolling pin of any of claims 1 to 6, **characterized in that** the rollers are of a massive synthetic material.

8. The rolling pin of claim 1, **characterized in that** said synthetic material is a polyammidic polymer.

9. The rolling pin of claim 1, **characterized in that** the handles (22, 24) at the ends of the shaft (18) comprise substantially round knobs.

10. The rolling pin of claim 1, **characterized in that** the handles (22, 24) are provided with respective flanges (32, 34).
